# FASCICULE DE BREVET EUROPEEN

(11) **EP 3 338 988 B1**
(45) Date de publication et mention de la délivrance du brevet: **09.02.2022**
(21) Numéro de dépôt: 17209891.5
(22) Date de dépôt: 21.12.2017
(51) Int. Cl.: B29C 45/14, B29C 70/68, F16B 37/12

(54) **INSERT DESTINÉ À ÊTRE MONTÉ SUR UN SUPPORT ET ENSEMBLE DE FIXATION COMPRENANT UN TEL INSERT**
EINSATZ FÜR TRÄGERWERKSTOFF UND ENTSPRECHENDER VERBUNDTEIL
INSERT TO BE MOUNTED ON A SUBSTRATE AND SUBSTRATE WITH THE INSERT

(30) Priorité: 23.12.2016 FR 1663278
(43) Date de publication de la demande: 27.06.2018
(73) Titulaire: Bollhoff Otalu, 73490 La Ravoire (FR)
(72) Inventeur: Faguer, Sylvain, 73800 Arbin (FR); Berlire, Emmanuelle, 73190 Challes-les-Eaux (FR); Bovagnet, Frédéric, 73470 Novalaise (FR); Jambut, Jean-François, 73190 Saint Jeoire Prieuré (FR); Lejars, Patrick, 38530 Barraux (FR); Basset, Raphael, 73000 Sonnaz (FR)
(74) Mandataire: Talbot, Alexandre

(56) Documents cités:
- EP-A1- 2 875 929
- EP-B1- 2 875 929
- JP-A- 2013 122 285

## Description

### Domaine technique de l'invention

L'invention est relative aux inserts destinés à être montés sur des supports, et plus particulièrement sur des supports moulés.

### État de la technique

De manière générale, un insert destiné à être monté sur un support moulé, noté également insert à surmouler, peut être un écrou, un rivet, une vis ou un goujon, ou une forme quelconque suivant sa fonction. Les inserts destinés à des supports moulés doivent être adaptés pour résister à des forces de traction et de cisaillement pour garantir une bonne tenue de la liaison mécanique entre le support sur lequel ils sont montés et une autre pièce que l'on souhaite fixer à l'insert.

Il existe différents types d'inserts à surmouler. Par exemple, on peut citer les inserts dont le corps est noyé dans une résine thermoplastique ou thermodurcissable sur la totalité de la hauteur de leur corps. On peut également citer la demande de brevet japonais JP2013-122285A qui divulgue un écrou intégré dans un élément en résine à fibres renforcées, l'écrou étant muni d'un flasque circulaire muni d'une pluralité de trous traversants ayant tous la même forme.

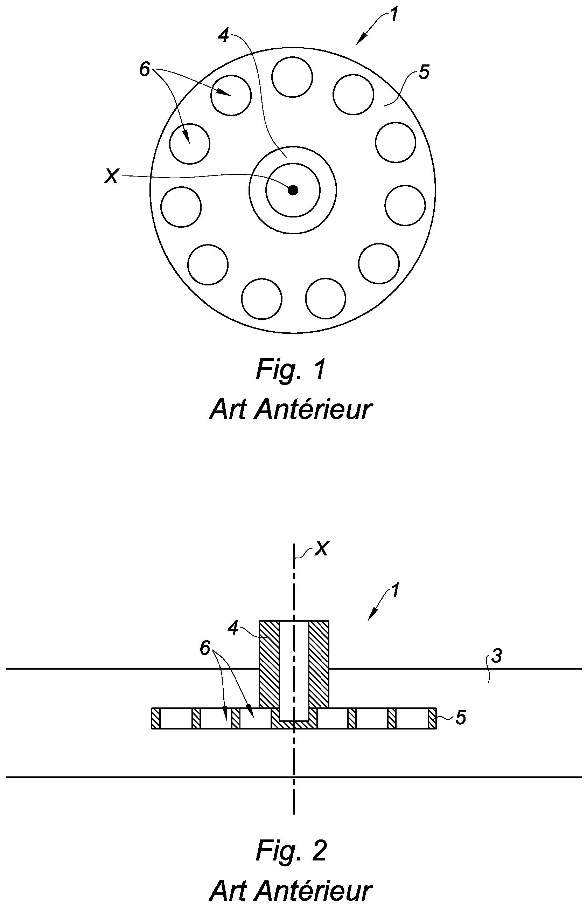

Sur les figures 1 et 2, on a représenté de façon schématique un rivet 1 de l'art antérieur. Sur la figure 1, on a représenté une vue de dessus du rivet 1. Sur la figure 2, on a représenté une vue en coupe du rivet 1 inclus dans une pièce moulée 3. Le rivet 1 représenté sur les figures 1 et 2 comporte un corps creux 4, tel un fût, s'étendant le long d'un axe longitudinal X du rivet 1, et une embase 5 soudée à une extrémité du corps 4. L'embase 5 à une forme d'une plaque circulaire. En outre, l'embase 5 est perforée, c'est-à-dire que plusieurs orifices circulaires traversants 6 sont formés dans l'embase 5. Les orifices circulaires 6 de l'embase 5 sont destinés à laisser pénétrer des fibres de résine de manière à créer des fibres de renfort. Un tel rivet 1 est intégré dans la pièce moulée 3 en injectant une résine sur le rivet 1, de manière à noyer l'embase 5 dans la résine pour fixer mécaniquement le rivet 1 à la pièce 3 lorsque la résine durcie. En général, la résine est un matériau fluide qui peut durcir sous l'effet de la chaleur et qui est réalisé à partir de polyester et de fibres de verre. Il existe également d'autres résines thermoplastiques qui durcissent en refroidissant. Mais ces rivets n'offrent pas une tenue mécanique suffisante dans la pièce moulée par injection. En particulier, lorsque le rivet est réalisé à partir d'une matière différente de celle de la résine, par exemple un rivet en acier, la tenue mécanique de matériaux composites thermodurcissables ou thermoplastiques est difficile à obtenir.

On peut également citer la demande de brevet français FR3013253 et la demande de brevet européen EP2875929A1 qui divulguent un insert comprenant un corps s'étendant le long d'un axe longitudinal et une embase située à une extrémité du corps et dans laquelle plusieurs orifices traversants sont formés. Les orifices traversants sont orientés selon une direction inclinée par rapport à l'axe longitudinal, afin d'améliorer la pénétration des fibres de renfort lors de l'injection de la résine. Mais ces inserts sont destinés aux supports réalisés par moulage d'une résine par injection. Ils ne sont pas adaptés aux supports réalisés par chauffage et compression.

On peut citer la demande de brevet français FR3021899 qui divulgue une plaque constituée d'un matériau composite à renforts fibreux dans une matrice constituée d'un polymère thermoplastique, et une pièce métallique comportant une interface mécanique pour réaliser des fonctions techniques de l'articulation, telles qu'une liaison pivot ou une indexation angulaire. La pièce métallique est liée à la plaque, et l'interface métallique est fixée par soudage laser à un plateau comprenant une pluralité de picots cylindriques sensiblement perpendiculaires au plateau et qui pénètrent dans la plaque. Par ailleurs, des trous à bords tombés peuvent être réalisés dans le plateau, et forment un motif d'accouplement qui pénètre dans la plaque. Mais ces inserts n'offrent pas une tenue mécanique suffisante avec le support.

### Objet de l'invention

L'objet de l'invention consiste à fournir un insert destiné à être monté sur un support qui permette de pallier les inconvénients précités, et en particulier qui offre une meilleure tenue mécanique de l'insert sur le support.

Un autre objet consiste à fournir un insert adapté aux supports thermoplastiques ou thermodurcissables.

Selon un aspect de l'invention, il est proposé un insert destiné à être monté sur un support, comprenant un corps s'étendant le long d'un axe longitudinal et une embase comportant au moins une plaque s'étendant selon un plan d'embase, au moins un orifice traversant orienté selon un axe d'orientation perpendiculaire au plan d'embase étant formé dans ladite au moins une plaque.

Au moins une protubérance est formée sur une première surface de ladite au moins une plaque et forme un creux sur une deuxième surface de ladite au moins une plaque.

Ainsi, on offre un insert qui améliore sa tenue mécanique avec le support. Cet insert est adapté à des supports thermoplastiques et thermodurcissables. En particulier, cet insert offre une meilleure résistance au cisaillement.

Selon un mode de réalisation, au moins une protubérance peut avoir une forme de bosse ayant un sommet s'étendant entre une partie centrale et un bord externe de ladite au moins une plaque.

Selon un autre mode de réalisation, au moins une protubérance peut avoir une forme de bosse ayant un sommet s'étendant le long d'une ligne entourant le corps.

La ligne peut avoir une forme ondulée par rapport au plan d'embase.

Selon un autre mode de réalisation, au moins une protubérance peut avoir une forme de plateau s'étendant entre une partie centrale et un bord externe de ladite au moins une plaque.

Selon un autre mode de réalisation, au moins une protubérance peut avoir une forme de plateau s'étendant le long d'une ligne entourant le corps.

Plusieurs protubérances peuvent être formées sur la première surface de ladite au moins une plaque.

Au moins une protubérance peut être formée sur la deuxième surface et forme un creux sur la première surface opposée, le creux étant situé entre deux protubérances formées sur la première surface.

Au moins un orifice traversant peut être délimité par un contour tronconique incliné selon un angle, par rapport à l'axe d'orientation dudit au moins un orifice traversant, compris entre 10° et 80° ou compris entre 100° et 170°.

Un évidement peut être formé dans ladite au moins une plaque, et plusieurs éléments saillants sont situés en saillie d'une surface de l'évidement.

Les éléments saillants peuvent être des pointes à base quadrilatérale.

L'embase peut comporter plusieurs plaques.

Selon un autre aspect de l'invention, il est proposé un ensemble de fixation comprenant un support et un insert, tel que défini ci-avant, monté sur le support.

Le support peut être réalisé par moulage.

### Description sommaire des dessins

D'autres avantages et caractéristiques de l'invention apparaîtront à l'examen de la description détaillée de modes de réalisation, nullement limitatifs, et des dessins annexés sur lesquels :
- les figures 1 et 2, illustrent schématiquement deux vues d'un rivet selon l'art antérieur ;
- la figure 3, illustre schématiquement une vue en perspective d'un mode de réalisation d'un insert selon l'invention ;
- la figure 4, illustre de façon schématique une vue latérale en perspective de l'insert illustré à la figure 3 ;
- la figure 5, illustre schématiquement une vue en coupe d'un mode de réalisation d'un contour tronconique ;
- la figure 6, illustre schématiquement une vue de dessous et en perspective d'un autre mode de réalisation d'un insert selon l'invention ;
- la figure 7, illustre schématiquement une vue en coupe d'un mode de réalisation d'un ensemble d'éléments saillants ;
- la figure 8, illustre schématiquement une vue en coupe d'un autre mode de réalisation d'un ensemble d'éléments saillants ;
- la figure 9, illustre schématiquement une vue en coupe d'un ensemble de fixation selon l'invention ; et
- les figures 10 à 11, illustrent schématiquement des vues en perspective d'autres modes de réalisation d'un insert selon l'invention.

### Description détaillée

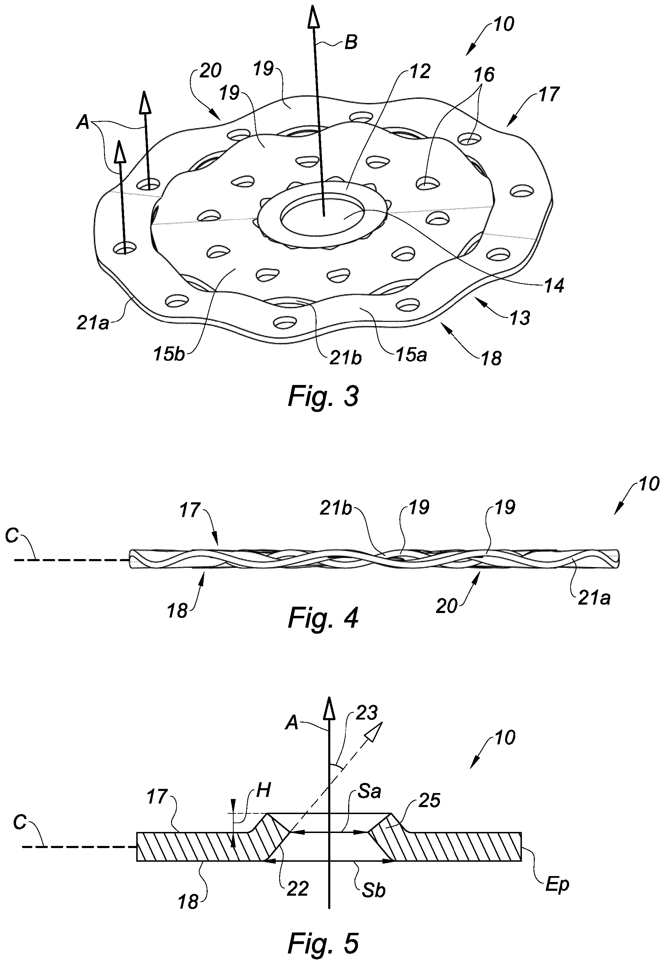

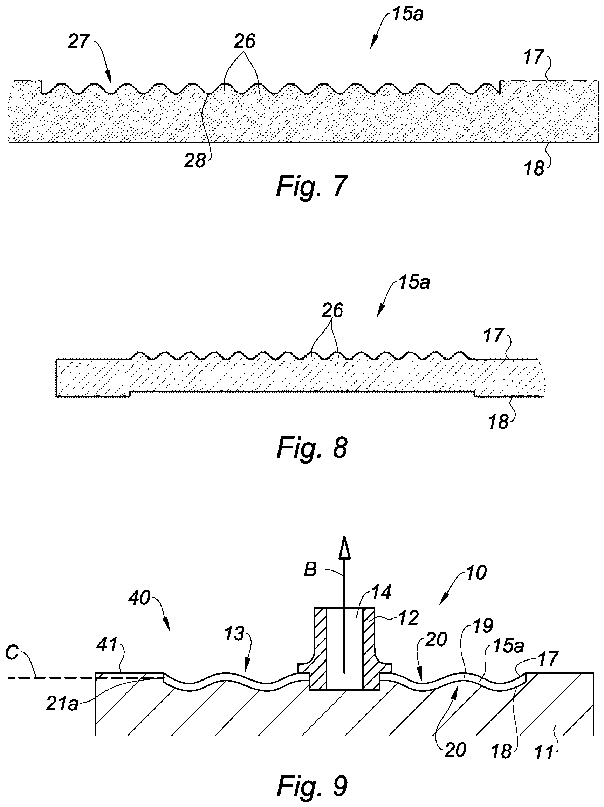

Sur les figures 3 à 12, on a représenté un insert 10 destiné à être monté sur un support 11, illustré quant à lui sur la figure 9. Avantageusement, l'insert 10 est particulièrement adapté pour être monté sur un support 11 moulé.

L'insert 10 peut être un écrou, un rivet, une vis ou un goujon. Un écrou est une pièce creuse taraudée, c'est-à-dire qui comporte un filetage interne, destinée à recevoir une autre pièce filetée. Un rivet est un élément d'assemblage de pièces plates renflé à une extrémité et dont on écrase l'autre extrémité. Une vis ou goujon est une pièce pleine filetée, c'est-à-dire qui comporte un filetage externe. Préférentiellement, l'insert 10 est en métal, par exemple en acier. L'insert 10 comprend un corps 12, tel un fût, s'étendant le long d'un axe longitudinal B, et une embase 13 située à une extrémité du corps 12. Le corps 12 de l'insert 10 a une forme globalement cylindrique. On entend ici par cylindre, un solide limité par une surface cylindrique engendrée par une droite, notée génératrice, parcourant une courbe plane fermée, notée directrice, et deux plans coupant les génératrices. Le corps 12 peut avoir une hauteur égale à l'épaisseur de l'embase 13, comme illustré sur la figure 3. En variante, le corps 12 s'étend en saillie de l'embase 13, comme illustré sur la figure 9. De préférence le corps 12 a une forme d'un cylindre creux délimitant un orifice 14 traversant ou borgne.

L'embase 13 comporte au moins une plaque 15a, 15b dans laquelle au moins un orifice traversant 16 est formé. Préférentiellement, l'embase 13 comporte une seule plaque 15a. En variante, l'embase 13 comporte deux ou plusieurs plaques 15a, 15b. Sur la figure 3, on a représenté un exemple dans lequel un insert 10 a une première plaque 15a et une deuxième plaque 15b entourant la première plaque 15. Par exemple, les plaques 15a, 15 sont reliées entre elles, par soudure. En variante, l'embase 13 peut comporter plusieurs plaques 15a, 15b superposées. Chaque plaque 15a, 15b s'étend selon un plan d'embase C. Le plan d'embase C correspond à un plan perpendiculaire au plan de la feuille des figures 4, 5 et 9. En outre, chaque plaque 15a, 15b présente une première surface 17 et une deuxième surface 18 opposée à la première surface 17.

De manière générale, les orifices traversants 16 sont orientés selon des axes respectifs A, notés axes d'orientation. En d'autres termes, les orifices traversants 16 ont, chacun, un axe d'orientation A qui traverse l'orifice 16. En outre, un orifice traversant comporte une première extrémité située au niveau de la première surface 17 et ayant une section Sa, notée section d'ouverture, et une deuxième extrémité située au niveau de la deuxième surface 18 et ayant une section Sb, notée section de base. Plus particulièrement, l'axe d'orientation A d'un orifice traversant 16 est perpendiculaire par rapport à la section de base Sb de l'orifice 16, comme illustré sur la figure 5. Préférentiellement, les axes d'orientation A des orifices traversants 16 sont perpendiculaires au plan d'embase C de chacune des plaques 15, 15b. C'est-à-dire que la section Sa, Sb d'au moins une extrémité d'un orifice traversant 16 est située dans un plan parallèle au plan d'embase C de la plaque 15a, 15b. Par exemple, les axes d'orientation A peuvent être parallèles à l'axe longitudinal B, ce qui facilite leur réalisation. En variante, les axes d'orientation A sont parallèles entre eux et inclinés, d'un écart angulaire, avec l'axe longitudinal B. Une telle plaque 15a, 15b permet d'augmenter la tenue mécanique de l'insert 10 lorsque ce dernier est monté sur un support 11 moulé. Dans ce cas, des lignes de renforts s'introduisent au sein des orifices traversants 16 et augmentent la résistance de l'insert 10 au cisaillement. Avantageusement, un nombre impair d'orifices traversants 16 sont formés dans la plaque 15a, 15b, pour créer une dissymétrie par rapport au centre de l'insert 10 et fournir une meilleure résistance au pliage. Préférentiellement, l'insert 10 est en métal, par exemple en acier. En variante, le corps 12 et la plaque 15a, 15b peuvent être réalisés à partir d'un même matériau ou de deux matériaux distincts. Selon une autre variante, l'insert 10 comporte plusieurs corps 12, chaque corps 12 assurant une fonction de fixation d'une pièce au support 11. La plaque 15a, 15b a une partie de sa deuxième surface 18 remplie de matière qui est supérieure à la somme des surfaces de base Sb des orifices traversants 16. Ainsi, on garantit un contact important entre la partie remplie de matière et le support 11.

Le support 11 peut être thermoplastique ou thermodurcissable. Par exemple le support 11 peut être réalisé à partir d'un matériau plastique ou composite. De préférence, on forme le support 11 par moulage. Un support thermoplastique est réalisé à partir d'un matériau malléable sous l'effet de la chaleur. Un support thermodurcissable est, quant à lui, réalisé à partir d'un matériau résineux auquel un échauffement prolongé fait perdre sa plasticité. Le support peut être moulé par injection d'une résine thermodurcissable. Avantageusement, l'insert 10 creux est borgne pour empêcher la résine de pénétrer à l'intérieur du corps 12. En variante, il peut être réalisé par chauffage de bandes thermoplastiques, qui peuvent se ramollir sous l'effet de la chaleur. Il peut aussi être réalisé par compression et cuisson de bandes thermodurcissables qui se liquéfient sur la plaque 15a, 15b de l'insert 10. On place généralement l'insert 10 au sein d'un moule destiné à recevoir un matériau thermoplastique ou thermodurcissable pour réaliser le support 11 et monter l'insert 10 au support 11. On obtient ainsi un ensemble de fixation 40 comprenant l'insert 10 monté sur le support 11. Optionnellement, le support 11 peut comprendre une partie en tissu de renfort, par exemple une partie munie de fibres de verre, ou de fibres de carbone, ou de fibres d'aramide, ou un mélange des trois, ou encore de fils métalliques, voire de fibres végétales. La partie en tissu peut être tissée ou tricotée sur un voile pour renforcer localement le support 11. La partie en tissu peut être fixée sur l'insert 10 pendant le moulage.

L'insert 10 est particulièrement adapté pour être monté sur un support 11 de sorte qu'une surface 41 du support 11, située autour de l'insert 11, ne dépasse pas la première surface 17 de la plaque 15a. En d'autres termes, la première surface 17 de la plaque 15a peut rester visible une fois l'insert 10 monté sur le support 11. Dans ce cas, l'insert 10 supporte majoritairement les sollicitations mécaniques. En variante, la plaque 15a est noyée au sein du support 11. Dans ce cas la première surface 17 n'est pas visible. L'adhésion entre l'insert 10 et le support 11 est alors renforcée.

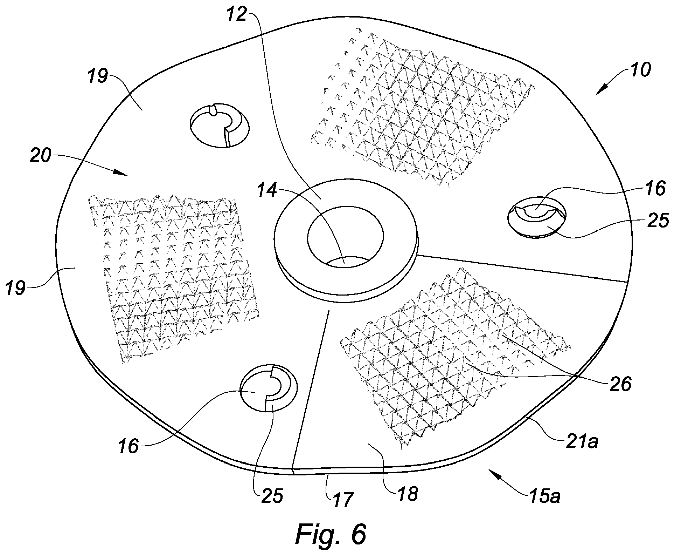

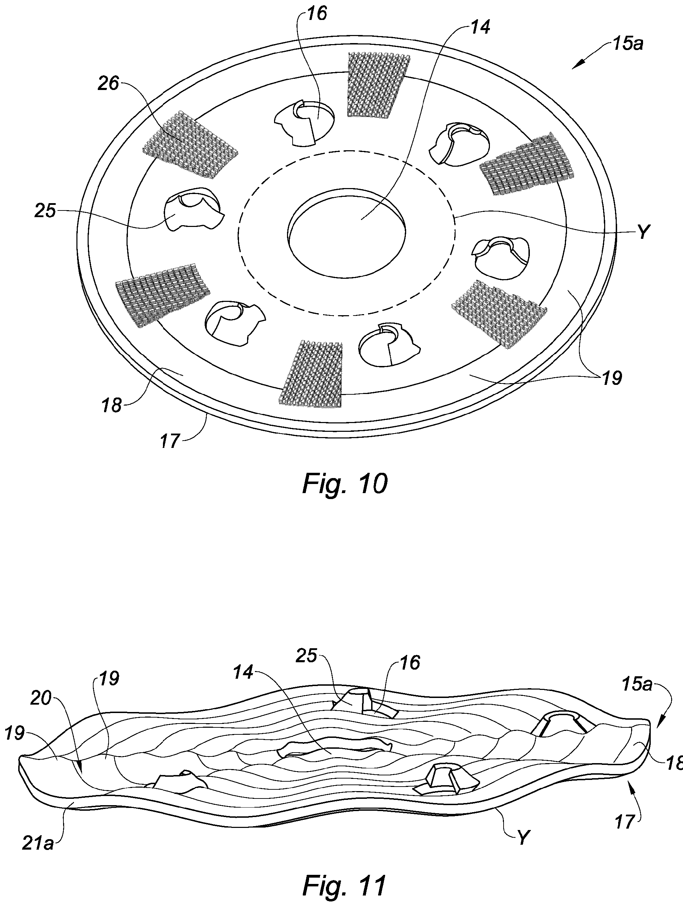

Plus particulièrement, au moins une protubérance 19 est formée sur une première surface 17, 18 de la plaque 15a, 15b. Plusieurs protubérances 19 peuvent être formées sur une surface 17, 18 de la plaque 15a, 15b. Par ailleurs, chaque protubérance 19 forme un creux 20 sur la deuxième surface opposée 18, 17 de la plaque 15a, 15b. Par exemple, au moins une protubérance 19 a une forme de bosse, comme illustré sur les figures 3, 6, 10 et 11. On entend par bosse, une protubérance 19 arrondie. On dit alors que la plaque 15a, 15b a une forme ondulée. C'est-à-dire que la plaque 15a, 15b comporte une première surface 17 comportant une pluralité de bosses 19 formant des creux 20 situés sur la deuxième surface 18 de la plaque 15a, 15b. Inversement, la deuxième surface 18 de la plaque 15a, 15b comporte une pluralité de bosses 19 formant des creux 20 situés sur la première surface 17 opposée. En particulier, chaque creux 20 situé sur une surface 17, 18 est en outre situé entre deux bosses 19 formées sur la même surface 17, 18. Les bosses 19 forment des vagues sur une surface 17, 18 de la plaque 15a, 15b. Par exemple, la plaque 15a, 15b comporte une première surface 17, 18 sur laquelle des bosses 19 et des creux 20 sont formés. Par exemple, comme illustré sur les figures 3 et 6, les bosses 19 ont, chacune, un sommet s'étendant entre une partie centrale de la plaque 15a, 15b et un bord externe 21a, 21b situé à la périphérie de la plaque 15a, 15b. Sur la figure 3, on a représenté une première plaque 15b dont la partie centrale correspond au corps 12 de l'insert 10, et une deuxième plaque 15a dont la partie centrale correspond à un bord interne entourant et reliant le bord externe 21b de la première plaque 15b. En variante, les bosses 19 ont, chacune, un sommet s'étendant le long d'une ligne Y entourant le corps 12 de l'insert. A titre d'exemple, on a représenté sur la figure 10 une plaque 15a comprenant une seule bosse 19. Par exemple, la ligne Y peut être un cercle dont le centre correspond à celui du corps 12 de l'insert 10. Selon un autre exemple, illustré à la figure 11, la ligne Y a une forme ondulée par rapport au plan d'embase C.

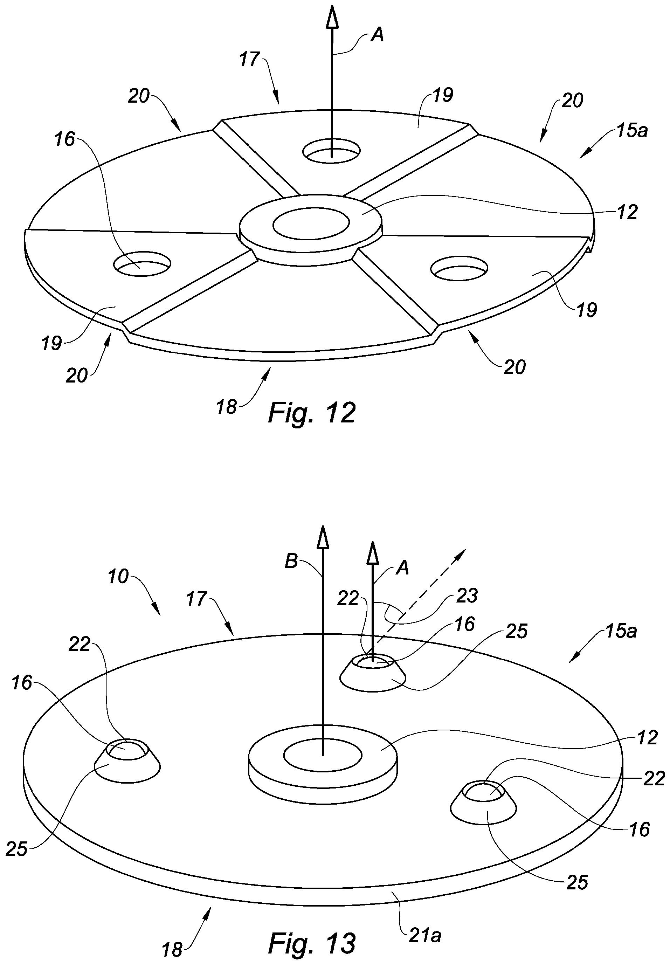

Selon une autre variante, au moins une protubérance 19 a une forme de plateau, comme illustré sur la figure 12. On entend par plateau, une protubérance 19 qui présente une partie plate reliant deux bords angulaires, ou deux bords inclinés avec un écart angulaire par rapport à la partie plate. C'est-à-dire que la plaque 15a comporte une première surface 17 comportant une pluralité de plateaux 19 formant des creux 20 situés sur la deuxième surface 18 de la plaque 15a. Comme illustré sur la figure 12, la première surface 17 comporte trois plateaux. Inversement, la deuxième surface 18 de la plaque 15a comporte une pluralité de plateaux 19 formant des creux 20 situés sur la première surface 17 opposée. En particulier, chaque creux 20 situé sur une surface 17, 18 est en outre situé entre deux plateaux 19 formés sur la même surface 17, 18. Comme illustré sur la figure 12, les plateaux 19 s'étendent, chacun, entre la partie centrale de la plaque 15a et le bord externe 21a de la plaque 15a. En variante, les plateaux 19 s'étendent, chacun, le long d'une ligne Y entourant le corps 12 de l'insert.

Les protubérances 19 augmentent la rigidité de la plaque 15a, 15b, en comparaison avec une même plaque plane. En outre, les protubérances 19 augmentent la surface de contact de l'insert 10 avec le support 11, ce qui permet d'augmenter la résistance aux forces de traction, compression, ou cisaillement. En d'autres termes, l'insert 10 accompagne les déformations du support 11, c'est-à-dire qu'il maintient une adhésion avec le support 11 lors de sollicitations mécaniques, de traction de compression et de cisaillement. Le bord externe 21a, 21b de la plaque 15a, 15b peut avoir une forme variée, comme par exemple une forme circulaire, rectangulaire, carrée, en étoile... En outre, le bord externe 21a, 21b peut être limité par une découpe nette perpendiculaire aux surfaces 17, 18 de la plaque 15a, 15b. Selon un autre exemple, le bord externe 21a, 21b est terminé par un bord incurvé par rapport à l'une des surfaces 17, 18, c'est-à-dire incurvé par rapport au plan d'embase C.

De manière générale, un orifice traversant 16 est délimité par un contour 22 formé dans la plaque 15a, 15b. Le contour 22 est formé, par exemple en perçant l'orifice traversant 16 dans la plaque 15a, 15b. Le contour 22 a préférentiellement une forme tronconique inclinée selon un angle 23 par rapport à l'axe d'orientation A de l'orifice traversant 22 compris entre 10° et 80° ou compris entre 100° et 170°. On entend par cône, une surface engendrée par une droite mobile, appelée génératrice, passant par un point fixe, noté sommet, et parcourant une courbe fermée, notée courbe directrice. La section de base Sb est délimitée par la courbe directrice. Le cône peut être tronqué, et on note tronconique un cône dont la surface ne s'étend pas jusqu'au sommet. De préférence, l'angle 23 est égal à 80°. La section de base Sb de l'orifice traversant 16 peut avoir une forme circulaire ou en demi-lune comme illustré à la figure 6. Par exemple, comme illustré sur la figure 6, une partie du contour 22 est tronconique et l'autre partie est plane.

Un orifice traversant 16 peut être délimité par une extension 25 s'étendant en saillie d'une surface 17, 18 de la plaque 15a, 15b. L'extension 25 peut avoir un contour interne 22 tel que défini ci-avant. L'extension 25 est formée, par exemple en perçant l'orifice traversant 16 dans la plaque 15a, 15b tout en créant l'extension 25 en saillie d'une surface 17, 18. L'extension 25 a une hauteur H, par rapport à la surface 17, 18 dont il fait saillie, comprise entre la moitié de l'épaisseur Ep de la plaque 15a, 15b et le double de l'épaisseur Ep de la plaque 15a, 15b. De préférence, l'extension 25 a une hauteur H égale à 0,7 fois l'épaisseur de la plaque 15a, 15b. La hauteur H correspond à la distance entre la surface 17, 18, de laquelle il fait saillie, et l'extrémité de l'extension 25. L'extrémité de l'extension 25 délimite la section d'ouverture Sa. Plus particulièrement, pour un orifice traversant 16, le rapport entre la section d'ouverture Sa et la section de base Sb est compris entre 0,3 et 0,9. De préférence, le rapport Sa/Sb est égal à 0,6.

De telles extensions 25 permettent d'augmenter la surface de contact entre la plaque 15a, 15b et le support 11, ce qui augmente l'adhésion entre l'insert 10 et le support 11.

Sur la figure 13, on a représenté un mode de réalisation d'un insert 10 destiné à être monté sur un support 11. L'insert 10 comprend un corps 12 s'étendant le long d'un axe longitudinal B et une embase 13 comportant au moins une plaque 15a s'étendant selon un plan d'embase C. Au moins un orifice traversant 16 orienté selon un axe d'orientation A perpendiculaire au plan d'embase C est formé dans ladite au moins une plaque 15a. Au moins un orifice traversant 16 est délimité par un contour tronconique 22 incliné selon un angle 23, par rapport à l'axe d'orientation A dudit au moins un orifice traversant 16, compris entre 10° et 80° ou compris entre 100° et 170°. En outre, ladite au moins une plaque 15a présente une première surface 17 et une deuxième surface 18 opposée à la première surface 17. Par exemple, comme illustré sur la figure 13, l'insert 10 comporte une plaque 15a plate. En d'autres termes les surfaces 17, 18 sont planes.

La plaque 15a, 15b peut comporter plusieurs éléments saillants 26 pour augmenter la surface de contact entre l'insert 10 et le support 11, et de ce fait augmenter l'adhésion de l'insert 10 avec le support 11. En particulier les éléments saillants 26 permettent d'augmenter la résistance au cisaillement et au glissement. Les éléments saillants 26 répartissent l'effort sur la surface 17, 18 de la plaque 15a, 15b.

Par exemple, les éléments saillants 26 sont des pointes à base quadrilatérale. La base peut être carrée, rectangulaire, en forme de losange ou d'un parallélogramme. De préférence, la hauteur de la pointe est comprise entre 0,3 fois T et 0,5 fois T, où T correspond à la plus petite diagonale de la base quadrilatérale. Le rapport de longueur Q entre la moitié de la grande diagonale et une arête joignant le sommet de la pointe est compris entre 0,6 et 0,8. De préférence, l'angle entre une arête et le plan de la base quadrilatérale est égal à 75°, qui confère à l'insert 10 une résistance au glissement accrue. En outre, lorsque la base quadrilatérale est un losange, les côtés de la base sont, de préférence, inclinés de 30° par rapport à la plus grande diagonale de la base quadrilatérale. Les éléments saillants 26 peuvent être réalisés par refoulement de matière, ou par moulage. De préférence, un évidement 27 est formé dans la plaque 15a, 15b. En variante, plusieurs évidements 27 sont formés dans la plaque 15a, 15b. Un évidement 27 est délimité par une surface 28 située en retrait de la surface 17, 18 de la plaque 15a, 15b. Par ailleurs, plusieurs éléments saillants 26 peuvent être situés en saillie de la surface 28 d'un évidement 27.

En variante, comme illustré sur la figure 8, les éléments saillants 26 sont situés en saillie de la face 17 de la plaque 15a.

L'insert qui vient d'être décrit permet d'assurer un renfort de la tenue mécanique de l'insert monté sur un support. Un tel insert permet un assemblage d'une pièce sur un support réalisé dans un matériau thermodurcissable ou thermoplastique. L'insert est particulièrement adapté pour l'industrie automobile et peut également être utilisé dans le secteur naval ou celui de l'aéronautique.

## Revendications

1. Insert destiné à être monté sur un support (11), comprenant un corps (12) s'étendant le long d'un axe longitudinal (B) et une embase (13) comportant au moins une plaque (15a, 15b) s'étendant selon un plan d'embase (C), la au moins une plaque (15a, 15b) possédant des première et deuxième surfaces opposées (17, 18) et définissant au moins un orifice traversant (16) orienté selon un axe d'orientation (A) perpendiculaire au plan d'embase (C), et au moins une protubérance (19) et au moins un creux étant formées sur une première surface de ladite au moins une plaque (15a, 15b) et la au moins une protubérance (19) forme un creux sur la deuxième surface de ladite au moins une plaque (15a, 15b), **caractérisé en ce que** la au moins une protubérance (19) a une forme de plateau s'étendant depuis une partie centrale jusqu'à un bord externe (21a, 21b) de ladite au moins une plaque (15a, 15b), la au moins une protubérance (19) possédant une partie plate reliant deux bords angulaires ou deux bords inclinés avec un écart angulaire par rapport à la partie plate, les deux bords angulaire ou les deux bords inclinés séparant la au moins une protubérance et le au moins creux sur la première face de ladite au moins une plaque (15a, 15b).

2. Insert selon la revendication 1, dans lequel au moins une protubérance (19) a une forme de plateau s'étendant le long d'une ligne entourant le corps (12).

3. Insert selon la revendication 1 ou 2, dans lequel plusieurs protubérances (19) sont formées sur la première surface de ladite au moins une plaque (15a, 15b).

4. Insert selon la revendication 3, dans lequel au moins une protubérance est formée sur la deuxième surface et forme un creux sur la première surface opposée, le creux étant situé entre deux protubérances (19) formées sur la première surface.

5. Insert selon l'une des revendications 1 à 4, dans lequel au moins un orifice traversant (16) est délimité par un contour tronconique (22) incliné selon un angle (23), par rapport à l'axe d'orientation (A) dudit au moins un orifice traversant (16), compris entre 10° et 80° ou compris entre 100° et 170°.

6. Insert selon la revendication 5, dans lequel le contour tronconique est en saillie de ladite au moins une plaque (15a, 15b).

7. Insert selon la revendication 6, dans lequel au moins une protubérance est formée sur une première surface de ladite au moins une plaque (15a, 15b) et forme un creux sur une deuxième surface de ladite au moins une plaque (15a, 15b)

8. Insert selon la revendication 7, dans lequel au moins une protubérance (19) a une forme de bosse ayant un sommet s'étendant entre une partie centrale et un bord externe (21a, 21b) de ladite au moins une plaque (15a, 15b).

9. Insert selon la revendication 7, dans lequel au moins une protubérance (19) a une forme de bosse ayant un sommet s'étendant le long d'une ligne entourant le corps (12).

10. Insert selon la revendication 9, dans lequel la ligne a une forme ondulée par rapport au plan d'embase (C).

11. Insert selon l'une des revendications 1 à 10, dans lequel un évidement (27) est formé dans ladite au moins une plaque (15a, 15b), et plusieurs éléments saillants (26) sont situés en saillie d'une surface (28) de l'évidement (27).

12. Insert selon la revendication 11, dans lequel les éléments saillants (26) sont des pointes à base quadrilatérale.

13. Insert selon l'une des revendications 1 à 12, dans lequel l'embase (13) comporte plusieurs plaques (15a, 15b).

14. Ensemble de fixation comprenant un support (11) et un insert selon l'une des revendications 1 à 13 monté sur le support (11).

15. Ensemble selon la revendication 14, dans lequel le support (11) est réalisé par moulage.

## Patentansprüche

1. Einsatz für Trägerwerkstoff (11), umfassend einen Körper (12), der sich entlang einer Längsachse (B) erstreckt, und einen Sockel (13), der mit mindestens einer Platte (15a, 15b) versehen ist, die sich entlang einer Sockelebene (C) erstreckt, wobei die mindestens eine Platte (15a, 15b) erste und eine zweite entgegengesetzte Flächen (17, 18) aufweist und mindestens eine durchgehende Öffnung (16) definiert, die entlang einer Orientierungsachse (A) ausgerichtet ist, die lotrecht zur Sockelebene (C) steht, und wobei auf einer ersten Fläche der mindestens einen Platte (15a, 15b) mindestens ein Vorsprung (19) und mindestens eine Vertiefung ausgebildet sind, und der mindestens eine Vorsprung (19) auf der zweiten Fläche der mindestens einen Platte (15a, 15b) eine Vertiefung bildet, **dadurch gekennzeichnet, dass** der mindestens eine Vorsprung (19) die Form eines Plateaus hat, das sich von einem zentralen Abschnitt zu einer Außenkante (21a, 21b) der mindestens einen Platte (15a, 15b) erstreckt, der mindestens eine Vorsprung (19) einen flachen Abschnitt aufweist, der zwei eckige Kanten oder zwei schräge Kanten mit einem Winkelabstand relativ zum flachen Abschnitt verbindet, wobei die zwei eckigen Kanten oder die zwei schrägen Kanten den mindestens einen Vorsprung und die mindestens eine Vertiefung auf der ersten Fläche der mindestens einen Platte (15a, 15b) voneinander trennen.

2. Einsatz nach Anspruch 1, wobei mindestens ein Vorsprung (19) die Form eines Plateaus hat, das sich entlang einer den Körper (12) umgebenden Linie erstreckt.

3. Einsatz nach Anspruch 1 oder 2, wobei mehrere Vorsprünge (19) auf der ersten Fläche der mindestens einen Platte (15a, 15b) ausgebildet sind.

4. Einsatz nach Anspruch 3, wobei auf der zweiten Fläche mindestens ein Vorsprung ausgebildet ist und auf der entgegengesetzten ersten Fläche eine Vertiefung bildet, wobei die Vertiefung zwischen zwei Vorsprüngen (19) liegt, die auf der ersten Fläche ausgebildet sind.

5. Einsatz nach einem der Ansprüche 1 bis 4, wobei die mindestens eine durchgehende Öffnung (16) durch eine kegelstumpfförmige Kontur (22) begrenzt ist, die zur Orientierungsachse (A) der mindestens einen durchgehenden Öffnung (16) in einem Winkel (23) geneigt ist, der zwischen 10° und 80° oder zwischen 100° und 170° liegt.

6. Einsatz nach Anspruch 5, wobei die kegelstumpfförmige Kontur von der mindestens einen Platte (15a, 15b) vorspringt.

7. Einsatz nach Anspruch 6, wobei mindestens ein Vorsprung auf einer ersten Fläche der mindestens einen Platte (15a, 15b) ausgebildet ist und auf einer zweiten Fläche der mindestens einen Platte (15a, 15b) eine Vertiefung bildet.

8. Einsatz nach Anspruch 7, wobei mindestens ein Vorsprung (19) die Form eines Höckers hat, dessen Spitze sich zwischen einem zentralen Abschnitt und einer Außenkante (21a, 21b) der mindestens einen Platte (15a, 15b) erstreckt.

9. Einsatz nach Anspruch 7, wobei mindestens ein Vorsprung (19) die Form eines Höckers hat, dessen Spitze sich entlang einer den Körper (12) umgebenden Linie erstreckt.

10. Einsatz nach Anspruch 9, wobei die Linie in Bezug auf die Sockelebene (C) eine gewellte Form hat.

11. Einsatz nach einem der Ansprüche 1 bis 10, wobei in der mindestens einen Platte (15a, 15b) eine Aussparung (27) ausgebildet ist und mehrere vorspringende Elemente (26) von einer Fläche (28) der Aussparung (27) vorspringend angeordnet sind.

12. Einsatz nach Anspruch 11, wobei die vorspringenden Elemente (26) Spitzen mit viereckiger Basis sind.

13. Einsatz nach einem der Ansprüche 1 bis 12, wobei der Sockel (13) mehrere Platten (15a, 15b) umfasst.

14. Verbundteil, umfassend einen Trägerwerkstoff (11) und einen Einsatz nach einem der Ansprüche 1 bis 13, der auf dem Trägerwerkstoff (11) montiert ist.

15. Verbundteil nach Anspruch 14, wobei der Trägerwerkstoff (11) durch Formguss hergestellt ist.

## Claims

1. Insert designed to be fitted on a support (11), comprising a body (12) extending along a longitudinal axis (B) and a base (13) comprising at least one plate (15a, 15b) extending along a base plane (C), the at least one plate (15a, 15b) having first and second opposing surfaces (17, 18) and defining at least one through hole (16) oriented along an orientation axis (A) perpendicular to the base plane (C) and at least one protuberance (19) and at least one hollow being formed on a first surface of said at least one plate (15a, 15b), and the at least one protuberance (19) forms a hollow on a second surface of said at least one plate (15a, 15b), **characterized in that** at least one protuberance (19) has a form of a tray extending from a central part to an external edge (21a, 21b) of said at least one plate (15a, 15b), the at least one protuberance (19) having a flat portion connecting two angled edges or two sloped edges at an angular distance with respect to the flat portion, the two angled edges or the two sloped edges separating the at least one protuberance and the at least one hollow on the first surface of said at least one plate (15a, 15b).

2. Insert according to claim 1, wherein at least one protuberance (19) has a form of a tray extending along a line surrounding the body (12).

3. Insert according to claim 1 or 2, wherein several protuberances (19) are formed on the first surface of said at least one plate (15a, 15b).

4. Insert according to claim 3, wherein at least one protuberance is formed on the second surface and forms a hollow on the opposite first surface, the hollow being situated between two protuberances (19) formed on the first surface.

5. Insert according to one of the claims 1 to 4, wherein at least one through hole (16) is delimited by a truncated contour (22) inclined at an angle (23), with respect to the orientation axis (A) of said at least one through hole (16), comprised between 10° and 80° or comprised between 100° and 170°.

6. Insert according to claim 5, wherein the truncated contour (22) is salient from said at least one plate (15a, 15b).

7. Insert according to claim 6, wherein at least one protuberance is formed on a first surface of said at least one plate (15a, 15b) and forms a hollow on a second surface of said at least one plate (15a, 15b).

8. Insert according to claim 7, wherein at least one protuberance (19) has a form of a bump having an apex extending between a central part and an external edge (21a, 21b) of said at least one plate (15a, 15b).

9. Insert according to claim 7, wherein at least one protuberance (19) has a form of a bump having an apex extending along a line surrounding the body (12).

10. Insert according to claim 9, wherein the line has an undulating shape with respect to the base plane (C).

11. Insert according to one of claims 1 to 10, wherein a recess (27) is formed in said at least one plate (15a, 15b), and several salient elements (26) are situated salient from a surface (28) of the recess (27).

12. Insert according to claim 11, wherein the salient elements (26) are spikes with a quadrilateral base.

13. Insert according to one of claims 1 to 12, wherein the base (13) comprises several plates (15a, 15b).

14. Fixing assembly comprising a support (11) and an insert according to one of claims 1 to 13 fitted on the support (11).

15. Assembly according to claim 14, wherein the support (11) is made by moulding.
